Europäisches Patentamt

European Patent Office

Office européen des brevets

(19)

(11) **EP 0 449 353 B1**

(12) # FASCICULE DE BREVET EUROPEEN

(45) Date de publication et mention
de la délivrance du brevet:
**23.09.1998  Bulletin 1998/39**

(51) Int Cl.⁶: **G06F 17/30**, G06F 9/44

(21) Numéro de dépôt: **91200565.9**

(22) Date de dépôt: **15.03.1991**

(54) **Dispositif de traitement de données et procédé pour sélectionner des mots de données contenus dans un dictionnaire**

Datenverarbeitungsgerät und Verfahren um in einem Wörterbuch enthaltene Datenwörter auszuwählen

Information processing device and method to select words contained in a dictionary

(84) Etats contractants désignés:
**DE FR GB**

(30) Priorité: **20.03.1990  FR 9003539**

(43) Date de publication de la demande:
**02.10.1991  Bulletin 1991/40**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Koninklijke Philips Electronics N.V.**
  **5621 BA Eindhoven (NL)**
  Etats contractants désignés:
  **DE GB**

(72) Inventeur: **Sirat, Jacques**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**US-A- 4 104 717**

- **5EME CONGRES RECONNAISSANCE DES FORMES ET INTELLIGENCE ARTIFICIELLE, Grenoble, 27-29 novembre 1985, vol. II, pages 975-982, AFCET, FR; P. LOCKWOOD: "Acces rapide dans un dictionnaire de mots"**
- **IEEE COMMUNICATIONS MAGAZINE, novembre 1989, pages 47-64, IEEE, New York, US; R.P. LIPPMANN: "Pattern classification using neural networks"**

**Description**

L'invention concerne un dispositif de traitement de données pour sélectionner des mots de données MS parmi des mots de données DR contenus dans un dictionnaire, les mots de données DR étant référencés dans un espace multidimensionnel, les mots de données DR étant utilisés selon une répartition selon des sous-dictionnaires, ledit dispositif sélectionnant des mots de données MS qui soient les plus proches, selon un critère de correspondance, d'un mot de données DO à traiter.

Elle concerne également une méthode de sélection de mots de données MS.

Un tel dispositif et une telle méthode ont des applications dans la compression d'informations ou dans la classification de données.

Les méthodes qui sont généralement mises en oeuvre sont basées sur la recherche d'un mot $A^m$ qui soit le plus proche d'un mot de données X à traiter. Le mot $A^m$ appartient à un ensemble M de mots de référence appelé dictionnaire. Ces mots $A^m$ (ou X) possèdent généralement N composantes $A_i^m$ (ou $X_i$) avec $i=1$, N.

La proximité est généralement évaluée par un critère de distance $d(A^m,X)$ entre le mot $A^m$ et le mot X. Dans le cas où les composantes sont des nombres on peut par exemple prendre la distance euclidienne :

$$d(A^m, X) = \sum_{i=1}^{N} (A_i^m - X_i)^2$$

Il faut alors déterminer le mot $A^{m1}$ pour lequel la distance au mot de données X soit minimale. Donc pour tout mot $A^m$ du dictionnaire on doit avoir :

$$d(A^{m1},X) \leq d(A^m,X).$$

On peut également déterminer non seulement le mot $A^{m1}$ le plus proche mais également les K mots $A^{m1}$, $A^{m2},...,A^{mK}$ qui soient les plus proches au regard d'une limite prédéterminée de proximité.

Pour déterminer le ou les mots les plus proches, la manière actuellement utilisée consiste à effectuer un calcul complet de toutes les distances d'un mot de données par rapport à tous les mots du dictionnaire puis à rechercher la ou les plus faibles distances par une opération de comparaison. Une telle manière d'opérer permet d'obtenir un résultat sans erreur. Mais elle est fortement pénalisée car elle est très coûteuse en temps de calcul principalement pour le calcul de toutes les distances lorsque le dictionnaire renferme beaucoup de mots.

Différentes tentatives pour réduire cette durée de calcul ont été proposées mais elles conduisent généralement soit à introduire des erreurs soit à imposer des contraintes au dictionnaire.

Parmi de telles tentatives on peut citer l'article "Delayed-decision binary tree-searched vector quantization for image compression" par CHIA LUNG YEH, SPIE vol. 1099, 1989, p.154-158.

Ce document propose d'opérer une recherche en arbre sur les mots du dictionnaire en examinant à la fois plusieurs branches dudit arbre. Cette méthode détermine un codage avec peu d'erreurs dans le cas où le nombre de branches examinées est grand, ce qui augmente la durée de calcul.

Le problème posé consiste donc à sélectionner le ou les mots du dictionnaire qui soient les plus proches d'un mot de données à analyser en réduisant notablement la durée du traitement. Ceci doit pouvoir s'effectuer avec un taux d'erreurs arbitrairement faible.

On peut aussi citer l'article "Accès rapide dans un dictionnaire de mots" du 5ième Congrès Reconnaissance des formes et intelligence artificielle, 27-29 Novembre 1985, pages 975-982 qui décrit une méthode organisant les N mots d'un dictionnaire selon une structure en arbre. La méthode crée une partition des N mots en deux classes en minimisant une distorsion globale totale. Des noeuds sont crées regroupant des mots sur lesquels le processus est réitéré jusqu'à l'obtention d'un noeud terminal contenant un mot unique. En phase d'exploitation, pour déterminer le mot le plus proche d'un mot à traiter, on est prise pour choisir la branche à suivre afin d'arriver au noeud terminal contenant le mot le plus proche du mot à traiter.

L'invention consiste en un dispositif tel que le défini la revendication 1 qui comprend :

- des premiers moyens (20) pour effectuer un maillage dudit espace multidimensionnel en déterminant des mailles ayant un nombre préspécifié et quelconque de mailles, ce nombre n'étant pas soumis étroitement au nombre de mots de données DR du dictionnaire,
- des seconds moyens (24) (25) pour attribuer à chaque maille un seul sous-dictionnaire attribué qui contient des mots de données SDR sélectionnés parmi les mots de données DR du dictionnaire, les mots de données SDR d'un sous-dictionnaire attribué à une maille quelconque étant ceux qui satisfont audit critère de correspondance vis-à-vis des mots possibles que peut contenir ladite maille quelconque,
- des troisièmes moyens (20) (24) (27) pour exploiter lesdits sous-dictionnaires attribués en déterminant, pour chaque mot quelconque de données DO à traiter, la maille à laquelle il appartient, puis en déterminant, selon ledit critère de correspondance, parmi les mots SDR du sous-dictionnaire attribué à ladite maille, le/les mot(s) de données MS qui correspond(ent) le mieux audit mot quelconque de données DO à traiter.

L'invention telle que définie dans la revendication 10 concerne une méthode comprenant les étapes pour

- effectuer (20) un maillage dudit espace multidimensionnel en déterminant des mailles ayant un nombre préspécifié et quelconque de mailles, ce nombre n'étant pas soumis étroitement au nombre de mots de données DR du dictionnaire,
- attribuer (24) (25) à chaque maille un seul sous-dictionnaire attribué qui contient des mots de données SDR sélectionnés parmi les mots de données DR du dictionnaire, les mots de données SDR d'un sous-dictionnaire attribué à une maille quelconque étant ceux qui satisfont audit critère de correspondance vis-à-vis des mots possibles que peut contenir ladite maille quelconque,
- exploiter (20) (24) (27) lesdits sous-dictionnaires attribués en déterminant, pour chaque mot quelconque de données DO à traiter, la maille à laquelle il appartient, puis en déterminant, selon ledit critère de correspondance, parmi les mots de données SDR du sous-dictionnaire attribué à ladite maille, le/les mot(s) de données MS qui correspond(ent) le mieux audit mot quelconque de données DO à traiter.

La répartition du dictionnaire en plusieurs sous-dictionnaires attribués à chaque maille permet ainsi de réduire considérablement la durée du calcul lors de l'examen d'un mot quelconque de données DO à traiter. En intervenant sur les dimensions des mailles et le nombre d'exemples test on peut obtenir arbitrairement un taux d'erreurs petit.

Les mots de données DR du dictionnaire constituent un ensemble qui est partitionné à l'aide d'un maillage de l'espace renfermant cet ensemble. Ce maillage peut être formé par des séparateurs. Ceux-ci sont préférentiellement déterminés selon l'invention par un réseau de neurones. Il peut s'agir d'un réseau de neurones en couches ou d'un réseau de neurones en arbre. Mais il est également possible que ces séparateurs soient déterminés à partir d'une logique programmée (par exemple un réseau à logique programmée PLA) ou à partir d'une logique combinatoire.

Dans le cas préférentiel d'un réseau de neurones la phase de mise en place des séparateurs (donc du maillage) est mise en place lors d'une phase d'apprentissage. Lorsque les séparateurs sont construits on a ensuite une phase d'exploitation. Les réseaux de neurones sont constitués d'éléments appelés neurones qui réalisent une fonction dans l'espace des entrées.

Sous une forme générale on a :

$$V = f \left( \sum_{j=1}^{N} C_j \cdot X_j \right) \qquad (1)$$

où

$X_j$ est la composante d'ordre j de la donnée X,
$C_j$ est la composante d'ordre j du vecteur synaptique C,
N est la dimension de l'espace des données X,
f est une fonction généralement non linéaire.

Selon l'invention la fonction f est du type en marches d'escalier c'est-à-dire qu'elle est constante par intervalle par exemple $f(u)=i$ pour $a_i<u<a_{i+1}$ avec $i=0, I-1$ avec $a_0=-\infty$, $a_1<a_2<...<a_{I-1}$, $a_I=+\infty$.

Les neurones peuvent être organisés en réseau de neurones en couches ou en arbre. Pour cela le réseau de neurones possède des bornes d'entrée sur lesquelles arrive chaque composante des vecteurs d'entrée représentant chaque mot de donnée.

Dans un réseau de neurones en couches, tous les neurones d'une couche d'entrée sont réunis auxdites bornes d'entrée. On calcule successivement tous les états des neurones de la couche d'entrée dont les sorties V constituent les entrées de la couche suivante. Plusieurs couches successives peuvent être construites de cette manière.

Dans un réseau de neurones en arbre, tous les neurones sont réunis auxdites bornes d'entrée mais la mise en fonctionnement d'un neurone dépend du résultat délivré par le neurone qui le précède dans la hiérarchie en arbre.

Dans un réseau de neurones il faut distinguer la phase d'apprentissage de la phase d'exploitation. La phase d'apprentissage nécessite de calculer tous les états de neurones pour mettre en place les séparateurs et déterminer le nombre et l'interconnexion des neurones nécessaires à la tâche prévue. Mais pour un réseau de neurones en arbre lors de la phase d'exploitation on ne calcule plus à chaque fois tous les états des neurones, mais seulement les états des neurones actifs pour la phase en cours.

La fin de l'étape d'apprentissage apparaît lorsque toutes les couches du réseau de neurones en couches ont été calculées ou lorsque il n'y a plus nécessité de calculer un neurone successeur dans un réseau de neurones en arbre. Les états de sortie $V_j$, $j=1,r$ prenant un ensemble limité de valeurs, on obtient ainsi une partition (maillage) de l'espace des données en un nombre limité de sous-ensembles (maille). Cette partition sera apprise par l'un ou l'autre des réseaux de neurones sous la forme de coefficients synaptiques déterminés. Pour cela lors de la phase d'apprentissage on va présenter au réseau de neurones une série d'exemples pour lesquels le résultat en sortie est connu à l'avance. Préférentiellement les exemples choisis sont les mots du dictionnaire. Mais il est également possible de choisir des exemples de données n'appartenant pas au dictionnaire et pour lesquels on connaît a priori le mot le plus proche du dictionnaire. Le problème à apprendre consiste à classer des exemples de données selon le mot du dictionnaire le plus proche. De nombreux algorithmes d'apprentissage ont été développés. Ils sont connus de l'homme du métier. Il est possible par exemple de se référer à l'article de R.P. LIPPMAN "An introduction to computing with neural nets" IEEE ASSP Magazine Avril 1987, p.4 à 22.

Les mots de données qui sont introduits dans le réseau de neurones peuvent être soit des mots canoniques (non prétraités, par exemple des données brutes issues de pixels formant une image) soit des mots prétraités. Ainsi par exemple dans le traitement d'image les mots de données peuvent définir une caractéristique d'une suite de pixels : luminosité, contraste,... Dans un traitement de signal acoustique les mots de données peuvent être formés de suite d'échantillons relatifs à une caractéristique temporelle, fréquencielle... La situation est analogue dans des problèmes de classification de mots de données. Des coordonnées canoniques de tels mots de données canoniques peuvent être introduites ex abrupto dans le réseau de neurones. Mais il est également possible de considérer la distribution (au sens mathématique) formée par ces mots de données et de prétraiter ces données en fonction des caractéristiques propres à ladite distribution de l'ensemble des données relatives au problème à traiter. Ainsi par exemple il est possible d'effectuer une analyse en composantes principales de la totalité ou d'une partie de la distribution des mots du dictionnaire et de choisir des axes de coordonnées adaptés à cette distribution pour prétraiter les mots de données et utiliser une coordonnée principale de la distribution. Il est possible d'effectuer plusieurs prétraitements des données en effectuant des analyses en composantes principales successives sur des parties de la distribution de données, lesdites parties étant obtenues au fur et à mesure de l'évolution de l'apprentissage.

L'analyse en composantes principales est une méthode statistique qui permet de décrire un ensemble de N vecteurs $\vec{y}^{\mu}$ (points dans un espace à d dimensions) à l'aide d'un vecteur moyen

$$\langle \vec{y} \rangle = \frac{1}{N} \sum_{\mu} \vec{y}^{\mu} \, ,$$

de d directions principales et des d variances correspondantes $\sigma^2$. La méthode est détaillée dans "Eléments d'Analyse de Données" de E. DIDAY, J. LEMAIRE, J. POUGET, E. TESTU, Editeur Dunod (1982) p.167.

La fonction f (équation 1), généralement non linéaire, peut être fixée pour chaque neurone ou être adaptée en fonction des mots du dictionnaire. L'étape d'apprentissage doit permettre de calculer des coefficients synaptiques et de déterminer la/les fonctions f de sorte que chaque partition c'est-à-dire chaque maille déterminée par les sorties des neurones considérés renferme un nombre réduit de mots du dictionnaire.

Pour effectuer l'apprentissage il est possible d'utiliser un réseau à L couches et d'examiner une couche intermédiaire 1 pour l'attribution des mailles. Ceci permet d'augmenter le nombre de mailles, car en se rapprochant de la première couche le nombre de mailles effectivement utilisées s'accroît.

Lorsque le maillage a été effectué, on détermine les sous-dictionnaires affectés à chaque maille c'est-à-dire pour chaque configuration de sortie du réseau de neurones. Pour cela on construit les sous-dictionnaires en cumulant pour chaque maille les résultats obtenus en présentant une suite d'exemples $X^p$ :

- on choisit un ensemble d'exemples $X^p$ à tester pour lesquels on connaît la solution, c'est-à-dire pour lesquels on connaît les K mots les plus proches $A^{m1(p)}$, $A^{m2(p)}$,..., $A^{mK(p)}$ du dictionnaire ;
- on détermine l'état de sortie du réseau $V_1(p)$, $V_2(p)$,..., $V_r(p)$ (ce qui caractérise une maille particulière) pour chaque exemple $X^p$ ce qui défini l'appartenance des exemples $X^p$ à ladite maille ;
- on construit le sous-dictionnaire de chaque maille en cumulant les mots $A^{m1(p)}$, $A^{m2(p)}$,..., $A^{mK(p)}$ propres à chaque maille.

Ces sous-dictionnaires peuvent être stockés dans des mémoires adressées par les configurations des états de sortie du réseau de neurones.

En augmentant le nombre d'exemples de test on diminue le taux d'erreurs qui apparaît dans la phase d'exploitation suivante. Ce taux peut ainsi être fixé à une valeur arbitrairement faible.

Le réseau de neurones ayant appris son maillage et les sous-dictionnaires propres à chaque maille étant déterminés, le réseau de neurones peut alors opérer en phase d'exploitation sur des mots de données à traiter.

Pour cela le mot de données DO à traiter est introduit dans le réseau de neurones qui délivre en sortie une configuration des états de sortie $V_1...V_r$. Cette configuration permet de déterminer la maille et donc les mots SDR du sous-dictionnaire pertinent pour le traitement du mot de données DO.

Le critère de correspondance est alors déterminé de façon exhaustive sur la totalité des mots SDR de ce sous-dictionnaire $A^{m1}$, $A^{m2}$,...,$A^{mK}$ afin de calculer la correspondance entre le mot de données DO à traiter et chacun de mots SDR de ce sous-dictionnaire. Cette correspondance peut être obtenue en déterminant une distance ou une similitude.

Ainsi avantageusement le calcul de correspondance en phase d'exploitation se limite, pour un mot de données DO à traiter, à considérer uniquement les mots SDR du sous-dictionnaire dont il relève. Aucune contrainte n'est imposée au dictionnaire contenant les mots DR.

L'invention caractérise également une méthode de sélection de mots de données MS parmi des mots de données DR contenus dans un dictionnaire qui peut être mise en oeuvre par un calculateur programmé en conséquence.

La méthode se caractérise par les étapes suivantes :

- une première étape de maillage dudit espace multidimensionnel en déterminant des mailles ayant un nombre préspécifié et quelconque de mailles, ce nombre n'étant pas soumis étroitement au nombre de mots de données DR du dictionnaire,

- une seconde étape d'attribution à chaque maille d'un seul sous-dictionnaire attribué qui contient des mots de données SDR sélectionnés parmi des mots de données DR du dictionnaire, les mots de données SDR d'un sous-dictionnaire attribué à une maille quelconque étant ceux qui satisfont audit critère de correspondance vis-à-vis des mots possibles que peut contenir ladite maille quelconque,

- une troisième étape d'exploitation des sous-dictionnaires attribués en déterminant, pour chaque mot quelconque de données DO à traiter, son appartenance à une maille puis en déterminant, selon ledit critère de correspondance, parmi les mots de données SDR du sous-dictionnaire attribué à ladite maille, le/les mot(s) de données MS qui correspond (ent) le mieux audit mot quelconque de données DO à traiter.

Selon un mode subsidiaire de réalisation, il est également possible d'exploiter des mots SDR de sous-dictionnaires préétablis auxquels les mots DR du dictionnaire sont déjà associés. Le réseau de neurones sert alors à opérer la sélection du sous-dictionnaire approprié. Pour le réseau de neurones les sous-dictionnaires apparaissent comme des dictionnaires indépendants. Le dispositif selon l'invention comprend dans ce cas au moins un réseau de neurones dont les entrées reçoivent des signaux représentant les mots de données DO à traiter et dont les neurones de sortie délivrent des signaux de sortie ayant des configurations d'états de sortie spécifiques à chaque dictionnaire, lesdites configurations adressant les organes de mémorisation stockant les dictionnaires en fonction de chaque mot de données DO à traiter et des moyens pour déterminer parmi les mots de données SDR du dictionnaire adressé, le/les mot(s) de données MS qui correspond(ent) le mieux audit mot quelconque de données DO à traiter.

Les applications d'un dispositif ou de la méthode selon l'invention étant dans les domaines de la compression de données pour le traitement d'images ou de signaux acoustiques ou autres, ou dans les domaines de la classification de données, il apparaît un gain appréciable de durée de traitement. Les moyens matériels sont également allégés.

L'invention sera mieux comprise à l'aide des figures suivantes données à titre d'exemple non limitatif qui représentent :

- figure 1 : un exemple de maillage de l'espace des données dans une représentation symbolique à deux dimensions,

- figure 2A : un schéma illustrant la formation du maillage à l'aide d'un réseau de neurones,
- figure 2B : un schéma illustrant la génération des sous-dictionnaires,
- figure 2C : un schéma illustrant l'exploitation des sous-dictionnaires,
- figure 3A, 3B, 3C, 3D, 3E : dans un espace à 2 dimensions, un exemple illustrant les étapes successives de la méthode selon l'invention.

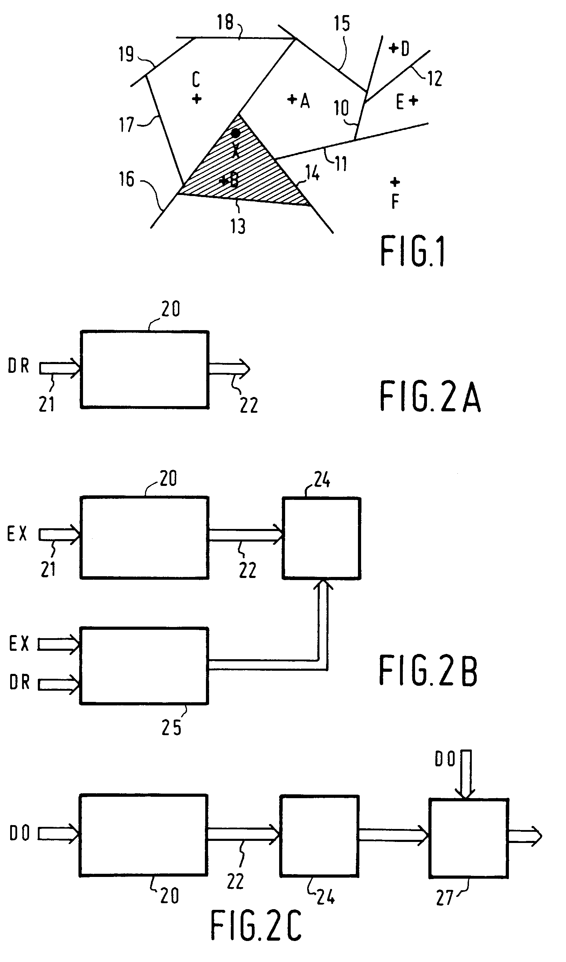

La figure 1 représente symboliquement un exemple de maillage de l'espace des données dans une représentation à deux dimensions. Au cours de la phase d'apprentissage le réseau de neurones va déterminer ses coefficients synaptiques afin de disposer des séparateurs 10 à 19 qui vont former ledit maillage. Les mailles vont renfermer un ou plusieurs mots du dictionnaire par exemple les mots A, B, C, D, E, F.

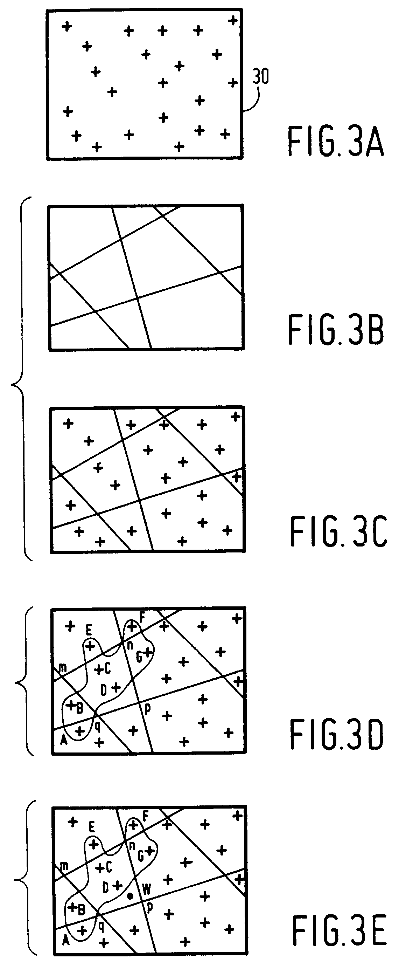

Pour bien mettre en évidence les étapes successives qui caractérisent l'invention on a représenté sur les figures 3A à 3E un exemple simple dans un espace à deux dimensions. Mais l'invention s'étend au cas d'espaces multidimensionnels.

Sur la figure 3A on a représenté par des croix des mots DR d'un dictionnaire dans un espace à deux dimensions limité, par simplification, à un rectangle 30. La première étape consiste à opérer un maillage de cet espace, c'est-à-dire à placer des séparateurs qui séparent des blocs de mots. Cette première étape est symbolisée sur la figure 3B. Lorsqu'elle est appliquée aux mots du dictionnaire de la figure 3A on obtient la situation représentée sur la figure 3C. Les figures 3B et 3C concernent cette première étape.

La seconde étape va consister à attribuer, à chaque maille ainsi créée, une partie des mots DR du dictionnaire. Cette attribution est opérée en utilisant un critère de correspondance. Pour plus de clarté considérons que ce critère de correspondance est un critère de distance aux plus proches voisins. Prenons le cas particulier de la maille mnpq. Elle contient les mots C et D qui appartiennent au dictionnaire. Mais ultérieurement, lors des étapes subséquentes d'exploitation, un mot inconnu pourra se situer en un endroit quelconque à l'intérieur de la maille mnpq. Il faut donc a priori examiner toutes les possibilités qui sont susceptibles d'apparaître ultérieurement afin d'attribuer à la maille mnpq non seulement les mots C et D quelle renferme mais également d'autres mots situés à l'extérieur de la maille mnpq mais qui peuvent néanmoins être des plus proches voisins pour un mot inconnu ultérieur qui se situera dans la maille. Sur la base de ce critère de correspondance on attribue ainsi également à la maille mnpq les mots A, B, E, F, G qui sont extérieurs à cette maille mais qui seront des plus proches voisins pour des mots inconnus situés près d'une des bordures de la maille. En définitive à la maille mnpq sont attribués les mots A, B, C, D, E, F, G, qui constituent ainsi un sous-dictionnaire attribué. Le même mécanisme est opéré pour chaque maille. Un même mot peut ainsi être attribué à plusieurs mailles. Ainsi les sous-dictionnaires attribués sont créés initialement indépendamment des mots à traiter DO à venir. La figure 3D caractérise cette étape d'attribution. Le contour 31 n'a aucune signification en soi. Il n'a pour but que de bien mettre en évidence le sous-dictionnaire attribué.

En exploitation, lorsqu'un mot inconnu, par exemple le mot W, doit être traité, la première tâche consiste à déterminer à quelle maille il appartient. Sur la figure 3E, le mot W est représenté à l'intérieur de la maille mnpq. Il doit donc être comparé uniquement au sous-dictionnaire attribué à la maille mnpq. Ainsi cette comparaison est à opérer uniquement sur un nombre très limité de mots ce qui assure une rapidité de traitement. En limitant à un nombre prédéterminé le nombre de mots attribués à un sous-dictionnaire il est ainsi possible de limiter la durée du traitement concernant chaque mot inconnu. Dans l'exemple de la figure 3E le mot de donnée MS sélectionné est le mot D du sous-dictionnaire attribué car le mot D est le plus proche voisin du mot W.

La figure 2A représente un réseau de neurones 20 qui reçoit sur ses entrées 21 successivement les mots DR du dictionnaire sous la forme de vecteurs à plusieurs composantes. Il délivre sur ses sorties 22 des états de sortie dont les diverses configurations vont permettre d'identifier le maillage l'espace des mots de données DR d'entrée. de La fonction du réseau de neurones va être de placer des séparateurs selon les méthodes d'apprentissage connues de l'homme du métier. Ainsi par exemple pour l'apprentissage d'un réseau de neurones en couches il est possible d'utiliser la méthode connue de rétropropagation de l'erreur qui consiste à présenter en entrée des exemples pour lesquels les résultats en sortie sont connus à l'avance (mot DR du dictionnaire le plus proche) et à faire rétropropager les erreurs dans le réseau de neurones. L'apprentissage va consister alors à calculer les coefficients synaptiques du réseau de neurones pour que les résultats connus à l'avance soient effectivement obtenus en sortie du réseau de neurones. Des informations peuvent être trouvées dans l'article de R.P. LIPPMAN, "An introduction to computing with neural nets" IEEE ASSP Magazine Avril 1987 p.4 à 22.

Il est également possible d'utiliser des réseaux de neurones en arbre, par exemple ceux décrits dans l'article de R.P. LIPPMAN, "Pattern classification using neural networks" IEEE COM Magazine Novembre 1989 p.47 à 64. Dans ce cas le réseau de neurones est construit de sorte qu'à la fois le nombre de neurones et les coefficients synaptiques soient adaptés à la tâche à apprendre. L'avantage de l'utilisation d'un réseau de neurones en arbre se situe dans le fait que non seulement le nombre de neurones à utiliser est inférieur au nombre de neurones d'un réseau de neurones en couches mais surtout dans le fait qu'en mode d'exploitation on ne calcule pas tous les états de neurones mais uniquement ceux des branches de l'arbre nécessaires à la tâche concernée.

Préférentiellement selon l'invention, l'apprentissage sera effectué afin que chaque mot de données DR du dictionnaire soit isolé dans une maille. Néanmoins une maille peut renfermer plusieurs mots du dictionnaire.

Lorsque le maillage est effectué, le dispositif doit générer les sous-dictionnaires. Le schéma de la figure 2B représente un exemple d'une telle génération. Pour cela on utilise des exemples de mots de données EX qui sont différents des mots de données DR du dictionnaire. Ces exemples EX ont une répartition aléatoire dans les différentes mailles de l'espace des entrées. Ces exemples EX sont introduits dans le réseau de neurones 20 et donnent en sortie des configurations d'états de sortie qui servent à adresser par exemple une mémoire 24. Ces exemples EX et les mots du dictionnaire DR sont introduits dans un élément 25 qui met en oeuvre le critère de correspondance. Ce critère de correspondance peut déterminer une distance ou une similitude entre deux données. C'est par exemple la distance euclidienne :

$$d(DR,EX) = (DR\text{-}EX)^2$$

Toutes les distances entre un exemple EX donné et tous les mots DR du dictionnaire sont alors calculées. Selon la correspondance prédéterminée désirée, certains mots DR du dictionnaire sont choisis pour former le sous-dictionnaire attribué à la configuration des états de sortie (c'est-à-dire à la maille) relative à l'exemple traité. Ce sous-dictionnaire est stocké dans la mémoire 24. Cette correspondance prédéterminée peut être la sélection des plus proches voisins ou les plus ressemblants ou une autre affectation.

En opérant sur un grand nombre d'exemples, on dispose ainsi de sous-dictionnaires attribués à chaque maille qui sont suffisamment nombreux, grâce au nombre de mailles et fournis grâce au nombre d'exemples EX, pour permettre de limiter les erreurs en mode d'exploitation. Le taux d'erreurs peut être ainsi réduit à une valeur arbitrairement faible en opérant avec un nombre d'exemples EX élevé. Aucune restriction sur le dictionnaire lui-même n'est imposée.

Lorsque les sous-dictionnaires ont été attribués, le dispositif peut être exploité pour opérer avec des mots de données DO à traiter (figure 2C). Ces mots de données DO sont introduits dans le réseau de neurones 20 et fournissent en sortie 22 une configuration d'états de sortie qui adresse la mémoire 24. Celle-ci délivre alors les mots SDR du sous-dictionnaire affecté à la maille adressée. Un organe 27, qui peut être l'organe 25 déjà décrit, détermine l'état de correspondance entre le mot de données DO et les mots SDR du sous-dictionnaire adressé. Cette détermination est donc opérée sur le nombre très limité de mots SDR du sous-dictionnaire ce qui permet un gain appréciable de durée de traitement.

Ainsi considérons le mot de données à traiter X situé dans la maille hachurée de la figure 1. Le sous-dictionnaire attribué à cette maille va comprendre par exemple les mots A, B, C et non pas les mots D, E, F car ils sont trop éloignés de la maille. Le calcul de la correspondance sera donc à réaliser pour ces seuls mots A, B, C du sous-dictionnaire attribué. Evidemment un même mot peut faire partie de plusieurs sous-dictionnaires. Mais c'est l'appartenance à une maille du mot de donnée DO à traiter qui déterminera le sous-dictionnaire sélectionné.

Selon le mode de réalisation qui vient d'être présenté le réseau de neurones sert à la fois pour attribuer les sous-dictionnaires et pour sélectionner chaque sous-dictionnaire approprié pour le traitement d'un mot de données DO en mode d'exploitation. Lorsque des dictionnaires sont déjà établis soit parce qu'ils sont déjà identifiés soit parce qu'ils sont déjà déterminés par d'autres approches, il est possible de limiter l'invention à l'exploitation représentée par la figure 2C. Ces dictionnaires se substituent alors aux sous-dictionnaires attribués précédemment définis. Le réseau de neurones 20 adresse la mémoire 24 qui délivre les mots SDR du dictionnaire adressé à l'organe de comparaison de correspondance 27 qui détermine le niveau de correspondance entre lesdits mots SDR du dictionnaire adressé et les mots DO de données d'entrée. La mémoire 24 peut être formée par tout organe adressable permettant de restituer différents dictionnaires adressés.

## Revendications

1. Dispositif de traitement de données pour sélectionner des mots de données MS parmi des mots de données DR contenus dans un dictionnaire, les mots de données DR étant référencés dans un espace multidimensionnel, les mots de données DR étant utilisés selon une répartition selon des sous-dictionnaires, ledit dispositif sélectionnant des mots de données MS qui soient les plus proches, selon un critère de correspondance, d'un mot de données DO à traiter, caractérisé en ce qu'il comprend :

- des premiers moyens (20) pour effectuer un maillage dudit espace multidimensionnel en déterminant des mailles ayant un nombre préspécifié et quelconque de mailles, ce nombre n'étant pas soumis étroitement au nombre de mots de données DR du dictionnaire,
- des seconds moyens (24) (25) pour attribuer à chaque maille un seul sous-dictionnaire attribué qui contient des mots de données SDR sélectionnés parmi les mots de données DR du dictionnaire, les mots de données SDR d'un sous-dictionnaire attribué à une maille quelconque étant ceux qui satisfont audit critère de correspondance vis-à-vis des mots possibles que peut contenir ladite maille quelconque,
- des troisièmes moyens (20) (24) (27) pour exploiter lesdits sous-dictionnaires attribués en déterminant, pour chaque mot quelconque de données DO à traiter, la maille à laquelle il appartient, puis en déterminant, selon ledit critère de correspondance, parmi les mots SDR du sous-dictionnaire attribué à ladite maille, le/les mot(s) de données MS qui correspond(ent) le mieux audit mot quelconque de données DO à traiter.

2. Dispositif selon la revendication 1 caractérisé en ce que le maillage est réalisé à l'aide d'un réseau de neurones dont des bornes d'entrée reçoivent des signaux représentant les mots de données DR du dictionnaire, et dont des neurones de sortie délivrent des signaux de sortie ayant des configurations d'états de sortie spécifiques à chaque maille.

3. Dispositif selon la revendication 2 caractérisé en ce que le réseau de neurones est un réseau de neurones en couches.

4. Dispositif selon la revendication 2 caractérisé en ce que le réseau de neurones est un réseau de neurones en arbre.

5. Dispositif selon la revendication 1 caractérisé en ce que le maillage est réalisé soit par une logique programmée soit par une logique combinatoire.

6. Dispositif selon une des revendications 1 à 5 caractérisé en ce que le dispositif est utilisé pour traiter des données brutes.

7. Dispositif selon une des revendications 1 à 5 caractérisé en ce que les mots de données sont des mots de données prétraités référencés selon au moins un type de coordonnée principale déterminée par une analyse en composantes principales de ladite distribution.

8. Dispositif selon une des revendications 1 à 7 caractérisé en ce que ladite correspondance est obtenue en déterminant soit une distance soit une similitude

9. Dispositif selon la revendication 8 caractérisé en ce que ladite distance est une distance aux plus proches voisins déterminée entre les mots de données DO à traiter et les mots de données SDR de son sous-dictionnaire attribué.

10. Méthode de sélection de mots de données MS parmi des mots de données DR contenus dans un dictionnaire, les mots de données DR étant référencés dans un espace multidimensionnel, les mots de données DR étant utilisés selon une répartition se-

Ion des sous-dictionnaires, ledit dispositif sélectionnant des mots de données MS qui soient les plus proches, selon un critère de correspondance, d'un mot de données DO à traiter, caractérisée en ce qu'elle comprend les étapes suivantes :

- une première étape de maillage dudit espace multidimensionnel en déterminant des mailles ayant un nombre préspécifié et quelconque de mailles, ce nombre n'étant pas soumis étroitement au nombre de mots de données DR du dictionnaire,
- une seconde étape d'attribution à chaque maille d'un seul sous-dictionnaire attribué qui contient des mots de données SDR sélectionnés parmi des mots de données DR du dictionnaire, les mots de données SDR d'un sous-dictionnaire attribué à une maille quelconque étant ceux qui satisfont audit critère de correspondance vis-à-vis des mots possibles que peut contenir ladite maille quelconque,
- une troisième étape d'exploitation des sous-dictionnaires attribués en déterminant, pour chaque mot quelconque de données DO à traiter, son appartenance à une maille puis en déterminant, selon ledit critère de correspondance, parmi les mots de données SDR du sous-dictionnaire attribué à ladite maille, le/les mot(s) de données MS qui correspond(ent) le mieux audit mot quelconque de données DO à traiter.

**Patentansprüche**

1. Datenverarbeitungsanordnung um Datenwörter MS unter in einem Wörterbuch enthaltenen Datenwörtern DR zu selektieren, wobei die Datenwörter DR in einem mehrdimensionalen Raum etikettiert werden, die Datenwörter DR nach einer Verteilung nach Teilwörterbüchern verwendet werden, und die genannte Anordnung Datenwörter MS selektiert, die entsprechend einem Entsprechungskriterium am nächsten an einem zu verarbeitenden Datenwort DO liegen, <u>dadurch gekennzeichnet,</u> daß sie folgendes umfaßt:

- erste Mittel (20), um eine Verknüpfung des genannten mehrdimensionalen Raums durchzuführen, indem die Maschen mit einer beliebigen, zuvor festgelegten Anzahl festgelegt werden, wobei diese Anzahl nicht eng an die Anzahl der Datenwörter DR des Wörterbuchs gebunden ist,
- zweite Mittel (24) (25), um jeder Masche ein einziges zugewiesenes Teilwörterbuch zuzuweisen, das Datenwörter SDR enthält, die aus den Datenwörtern DR des Wörterbuchs selektiert werden, wobei die Datenwörter SDR eines einer beliebigen Masche zugewiesenen Teilwörterbuchs diejenigen sind, die das genannte Entsprechungskriterium gegenüber den möglichen Wörtern, die die genannte beliebige Masche enthalten kann, erfüllen,
- dritte Mittel (20) (24) (27), um die genannten zugewiesenen Teilwörterbücher zu nutzen, indem für jedes beliebige, zu analysierende Datenwort DO die Masche, zu der es gehört, bestimmt wird und dann nach dem genannten Entsprechungskriterium unter den Wörtern SDR des der genannten Masche zugewiesenen Teilwörterbuchs, das Datenwort oder die Datenwörter MS bestimmt wird, das/die am besten dem genannten beliebigen, zu analysierenden Datenwort DO entspricht/entsprechen.

2. Anordnung nach Anspruch 1, <u>dadurch gekennzeichnet,</u> daß die Verknüpfung mit Hilfe eines neuronalen Netzes erfolgt, dessen Eingangsklemmen Signale empfangen, die die Datenwörter DR des Wörterbuchs repräsentieren, und dessen Ausgangsklemmen Ausgangssignale mit Konfigurationen von Ausgabezuständen liefern, die für jede Masche spezifisch sind.

3. Anordnung nach Anspruch 2, <u>dadurch gekennzeichnet,</u> daß das neuronale Netz ein neuronales Netz in Schichten ist.

4. Anordnung nach Anspruch 2, <u>dadurch gekennzeichnet,</u> daß das neuronale Netz ein baumförmiges neuronales Netz ist.

5. Anordnung nach Anspruch 1, <u>dadurch gekennzeichnet,</u> daß die Verknüpfung entweder durch eine programmierte Logik oder durch eine kombinatorische Logik erfolgt.

6. Anordnung nach einem der Ansprüche 1 bis 5, <u>dadurch gekennzeichnet,</u> daß die Anordnung zur Verarbeitung von Rohdaten verwendet wird.

7. Anordnung nach einem der Ansprüche 1 bis 5, <u>dadurch gekennzeichnet,</u> daß die Datenwörter vorbearbeitete Datenwörter sind, die nach wenigstens einem Hauptkoordinatentyp etikettiert werden, der durch eine Analyse in Hauptkomponenten der genannten Distribution festgelegt wird.

8. Anordnung nach einem der Ansprüche 1 bis 7, <u>dadurch gekennzeichnet,</u> daß die genannte Entsprechung durch Bestimmung einer Distanz oder Ähnlichkeit erhalten wird.

9. Anordnung nach Anspruch 8, <u>dadurch gekennzeichnet,</u> daß die genannte Distanz eine Distanz zu den nächsten Nachbarn ist, die zwischen den zu verarbeitenden Datenwörtern DO und den Datenwörtern SDR seines zugewiesenen Teilwörterbuchs bestimmt wird.

10. Verfahren um Datenwörter MS unter in einem Wörterbuch enthaltenen Datenwörtern DR zu selektieren, wobei die Datenwörter DR in einem mehrdimensionalen Raum etikettiert werden, die Datenwörter DR nach einer Verteilung nach Teilwörterbüchern verwendet werden, und die genannte Anordnung Datenwörter MS selektiert, die entsprechend einem Entsprechungskriterium am nächsten an einem zu verarbeitenden Datenwort DO liegen, <u>dadurch gekennzeichnet,</u> daß sie die folgenden Schritte umfaßt:

- ein erster Schritt, um eine Verknüpfung des genannten mehrdimensionalen Raums durchzuführen, indem die Maschen mit einer beliebigen, zuvor festgelegten Anzahl festgelegt werden, wobei diese Anzahl nicht eng an die Anzahl der Datenwörter DR des Wörterbuchs gebunden ist,
- ein zweiter Schritt, um jeder Masche ein einziges zugewiesenes Teilwörterbuch zuzuweisen, das Datenwörter SDR enthält, die aus den Datenwörtern DR des Wörterbuchs selektiert werden, wobei die Datenwörter SDR eines einer beliebigen Masche zugewiesenen Teilwörterbuchs diejenigen sind, die das genannte Entsprechungskriterium gegenüber den möglichen Wörtern, die die genannte beliebige Masche enthalten kann, erfüllen,
- ein dritter Schritt, um die genannten zugewiesenen Teilwörterbücher zu nutzen, indem für jedes beliebige, zu analysierende Datenwort DO seine Zugehörigkeit zu einer Masche bestimmt wird und dann nach dem genannten Entsprechungskriterium unter den Wörtern SDR des der genannten Masche zugewiesenen Teilwörterbuchs das Datenwort oder die Datenwörter MS bestimmt wird, das/die am besten dem genannten beliebigen, zu analysierenden Datenwort DO entspricht/entsprechen.

**Claims**

1. A data processing device for selecting data words MS from among data words DR contained in a dictionary, the data words DR being arranged in a multidimensional space and being used with a sub-division into sub-dictionaries, said device selecting data words MS which, in conformity with a correspondence criterion, are nearest to a data word DO to be processed, characterized in that it includes:

- first means (20) for performing a meshing operation on said multidimensional space while determining meshes with a specified and arbitrary number of meshes, said number not being strictly subject to the number of data words DR of the dictionary,
- second means (24) (25) for assigning to each mesh a single assigned sub-dictionary which contains data words SDR selected from among the data words SDR of the dictionary, the data words SDR of a sub-dictionary assigned to an arbitrary mesh being those which satisfy said correspondence criterion in respect of possible words that may be contained in said arbitrary mesh,
- third means (20) (24) (27) for using said assigned sub-dictionaries while determining, for each arbitrary data word DO to be processed, the mesh whereto it belongs, and by subsequently determining, in conformity with said correspondence criterion, from among the words SDR of the sub-dictionary assigned to said mesh the data word or words MS which correspond(s) best to said arbitrary data word DO to be processed.

2. A device as claimed in Claim 1, characterized in that the meshing is realized by means of a neural network whose input terminals receive signals representing the data words DR of the dictionary, and whose output neurons deliver output signals with output state configurations which are specific of each mesh.

3. A device as claimed in Claim 2, characterized in that the neural network is a layered neural network.

4. A device as claimed in Claim 2, characterized in that the neural network is a tree-type neural network.

5. A device as claimed in Claim 1, characterized in that the meshing is realized either by means of programmed logic or by means of combinatory logic.

6. A device as claimed in one of the Claims 1 to 5, characterized in that the device is used to process raw data.

7. A device as claimed in one of the Claims 1 to 5, characterized in that the data words are preprocessed data words arranged according to at least one type of principal co-ordinate which is determined by analysis of said distribution into principal components.

8. A device as claimed in one of the Claims 1 to 6, characterized in that said correspondence criterion is obtained by determining either a distance or a similarity.

9. A device as claimed in Claim 8, characterized in that said distance is a distance to the nearest neighbors, determined between the data words DO to be processed and the data words SDR of its assigned sub-dictionary.

10. A method for selecting data words MS from among data words DR contained in a dictionary, the data words DR being arranged in a multidimensional space and being used with a sub-division into sub-dictionaries, said device selecting data words MS which, in conformity with a correspondence criterion, are nearest to a data word DO to be processed, characterized in that it includes the following steps:

- a first step for performing a meshing operation on said multidimensional space while determining meshes with a specified and arbitrary number of meshes, said number not being strictly subject to the number of data words DR of the dictionary,

- a second step for assigning to each mesh a single assigned sub-dictionary which contains data words SDR selected from among the data words DR of the dictionary, the data words SDR of a sub-dictionary assigned to an arbitrary mesh being those which satisfy said correspondence criterion in respect of possible words that may be contained in said arbitrary mesh,

- a third step for using assigned sub-dictionaries while determining, for each arbitrary data word DO to be processed, the mesh whereto it belongs, and by subsequently determining, in conformity with said correspondence criterion, from among the data words SDR of the sub-dictionary assigned to said mesh the data word or words MS which correspond(s) best to said arbitrary data word DO to be processed.

FIG.1

FIG.2A

FIG.2B

FIG.2C

FIG.3A

FIG.3B

FIG.3C

FIG.3D

FIG.3E